# EUROPEAN PATENT SPECIFICATION

(11) **EP 0 624 974 B1**
(45) Date of publication and mention of the grant of the patent: **24.03.1999**
(21) Application number: 93107896.8
(22) Date of filing: 14.05.1993
(51) Int. Cl.: H04N 5/45, H04N 9/64

(54) **Method and system of mixing video signals**
Verfahren und System zur Mischung von Videosignalen
Méthode et système pour mélanger des signaux vidéo

(43) Date of publication of application: 17.11.1994
(73) Proprietor: MATSUSHITA ELECTRIC INDUSTRIAL CO., LTD., Kadoma-shi, Osaka-fu, 571 (JP)
(72) Inventor: Heiss, Rainer, Dr., D-6074 Rödermark 1 (DE)
(74) Representative: Grünecker, Kinkeldey, Stockmair & Schwanhäusser Anwaltssozietät

(56) References cited:
- WO-A-91/05443
- US-A- 4 638 360
- US-A- 5 166 796
- PROCEEDINGS OF THE SECOND INTERNATIONAL WORKSHOP ON SIGNAL PROCESSING OF HDTV, 29 FEBRUARY - 2 MARCH 1988, L'AQUILA, IT pages 65 - 72 RIEMANN ET AL. 'Signal Processing for a Digital HDTV Chroma Key Mixer'
- PATENT ABSTRACTS OF JAPAN vol. 16, no. 306 (M-1276)6 July 1992 & JP-A-4 085 063 ( CANON ) 18 March 1992

## Description

The present invention relates to a method and a TV system for inserting a sub-picture into a main picture on a TV screen by using a blanking signal for switching between a main signal and a sub-signal.

It is common use in video processing to mix pictures. The insertion of a subpicture into the main picture is effected by switching off the main signal, which builds up the main picture, in those parts of the scanning lines where a subsignal, which builds up the subpicture, is to be inserted.

Mixing of two pictures is no problem in analog technology. However, in TV sets where the analog signal is digitized, skew errors can occur in the displayed subpicture. These skew errors result in jagged borderlines between the main picture and the inserted subpicture. Some prior art TV signal processing circuits deal with the elimination of border structures such as the jerkiness of a border.

European Patent 0 304 308 relates to a digital television system for simultaneously displaying a plurality of pictures on a single screen. This digital television system locks the main system clock signal in phase to the timing signal used for inserting the subpicture into the main picture.

German Patent 30 27 053 discloses a method for correcting a digital switching signal that is used to switch between a main picture and a subpicture. The correction of the digital switching signal is effected by interpolating the digital switching signal between two sampling points.

Both of the above mentioned patents can be used to eliminate just one kind of border structure, namely, jerky borderlines between a main picture and an inserted part of a subpicture.

European Patent 0 235 902 describes a method and apparatus for inserting a subpicture into the main picture. To avoid sharp transitions at the border between the main picture and the subpicture, the subpicture overlaps the main picture in the area of the border between the two pictures. In its simplest form, an algorithm may be used that effects a gradual change in the overlapping region from 0% of the subpicture and 100% of the main picture to 100% of the subpicture and 0% of the main picture. This publication also mentions that, in more complex cases, the algorithm may be applied not only to the two overlapping pixels but also to adjacent pixels from the main picture and the subpicture. However, it does not disclose an algorithm of this kind.

In the article "Signal processing for a Digital HDTV chroma key mixer" in proceedings of the second international workshop on signal processing of HDTV, February 29 to March 22, 1988 by Riemann et al., a digital HDTV chroma key video mixer is described which uses an additive chroma key technique. The derivation of a suitable key signal out of the chrominance signals depends on the choice of a colour selection area. Using a colour selection area having a small proportional section results in aliasing in the output picture due to steep chrominance transitions. To avoid any degradation in the final picture, it is suggested to interpolate the chrominance signal to obtain a higher data rate or to employ a method of phase reconstruction of the colour signal.

From document WO-A-91/05443, a chroma key method for a video mixer is known which generates a switching signal from the transition of a subject to a uniform coloured (i.e. blue) background. The derivation of this switching signal is based on interpolated colour difference signals. The mixing of the input video signals employs a weighting of both video signals. For this purpose the transition width is detected and the values of the pixels of the transition area are replaced by a predetermined representative value.

US-A-5,166,796 is directed to a special effect apparatus enlarging an input video signal to reduce edge intrusion. Such a video signal is formed by sequential selection among a reference video signal, a preceding video signal and a trailing video signal to produce by an appropriate selection of the provided video signals a temporarily enlarged video signal.

In US-A-4,638,360 a picture-in-picture television display system is described in which two images from possibly unrelated sources are displayed simultaneously on one image. Due to timing errors the inserted image appears jagged. This distortion in the small image may be reduced by effecting adaptive signal delays in the small picture signal responsive to the relative phase of the system clock signal with respect to the horizontal synchronizing pulses of the large and/or small picture signal.

Apart from jerky borderlines and sharp transitions between a main picture and a subpicture, faint borderlines may also occur. In cases where the subpicture signals or the main picture signals do not have their full amplitude in the border region, for instance, due to their transient behavior, the border between the subpicture and the main picture will look faint. This happens in TV systems where the transients of the subsignals come instantaneously with the transients of the accompanying blanking signal that switches between the main picture and the inserted part of a subpicture.

Due to the finite slope of the subsignal, the subsignal may not have reached its full intensity at the switching moment of the blanking signal. This results in a faint border area between the main picture and the subpicture. Furthermore, due to the switching between the main signals and the subsignals, the brightness along the borderline may change, resulting in a flickering borderline when the main picture moves with respect to the inserted subpicture.

It is the object of the present invention to provide a method and a TV system for inserting a subpicture into a main picture on a TV screen which overcomes the above mentioned deficiencies of the prior art.

This is achieved for a method by the features of claim 1 and for a TV system by the features of claim 6.

Replacing the luminance value of the subsignal in the area of the border by a neighboring value eliminates the influence of the transient behavior of the subsignal and, thus, reduces the faintness of the border area.

The distance between two pixels is divided into sub-intervals. The switching transition of the blanking signal can be assigned to one of the sub-intervals. Luminance values of the subsignal for a pixel near the border are replaced only when the switching transition of the blanking signal occurs during specific sub-intervals. Thus, the replacement of a luminance value of a subsignal of a pixel can be carried out in dependence on the distance between the switching transition of the blanking signal and the respective pixel.

In a preferred embodiment, the chrominance values of the main signals and the subsignals are interpolated up to the rate of the luminance values. This also improves the quality of signal mixing and at the same time hardware complexity is reduced, since chrominance and luminance data can be processed with identical hardware.

In another preferred embodiment, both the luminance and the chrominance values of the subsignal for a pixel in the area of the border are utilized for replacing the subsignal of a neighboring pixel.

In another embodiment, the luminance values of the main signals and the subsignals of the pixels near the border are weighed by weighting factors and blended thereafter. The weighting factors are deduced in dependence on the distance between the switching transition of the blanking signal and the respective pixel. Blending the weighed luminance values of the main signal and the subsignal eliminates irregularities in the brightness along the borderline which may result in a flickering borderline between the main picture and the subpicture.

In another embodiment, luminance and chrominance values of the main signal and the subsignal of a pixel in the area of the border are multiplied by weighting factors prior to blending. This is advantageous if the inserted subpicture includes color information.

A corresponding circuit preferably comprises a low pass filter for low pass filtering the analog blanking signal prior to digitizing. Thus, the exact transition moment of the blanking signal can be determined.

A preferred embodiment of the invention is described with reference to the drawings.
- Fig. 1: is a chart depicting how a subpicture is inserted into the main picture at a rising transition of the blanking signal.
- Fig.2: is a chart depicting how a subpicture is inserted into the main picture at a falling transition of the blanking signal.
- Fig. 3: is a look up table for a four phase selection as used in the preferred embodiment.
- Fig. 4: is a block diagram explaining the weighting of the main signals and subsignals, as well as the replacement of subsignals by subsignals of adjacent pixels.
- Fig.5: is a diagram illustrating one example for the interpolation between the chrominance values.
- Fig. 6: is a schematic diagram of a preferred embodiment of the hardware structure for mixing video signals according to the invention.

A TV set is provided with analog signals, namely, the main signals for the main picture on the TV screen, the subsignals for the subpicture that is inserted at least partly into the main picture and the blanking signal for switching between the main signals and the subsignals. For digital TV sets, the incoming analog signals have to be digitized.

The incoming analog blanking signal, effecting the switching between the main signals and the subsignals, has only two levels with a relative step transition.

In a first step, the analog blanking signal is lowpass filtered. Then, the analog blanking signal is sampled and digitized to a data stream with more than one bit per sample. Here, a data stream of four-bit words is used. Because the blanking signal has been low-pass filtered prior to sampling, the exact transition moment from one sample to the next sample of the blanking signal can be recovered from the digitized blanking signal by well known methods, if one knows the characteristic behaviour of the above mentioned low pass filter.

The interval between two pixels is divided into subintervals, for instance, into four subintervals. The transition moment of the blanking signal in the digital domain is assigned to one of the four subintervals between two pixels.

According to the location of the subinterval where the transition from one level to the other level occurs, the digital blanking signal is assigned a phase.

In the embodiment described here, since there are four subintervals between two pixels, a transition can occur in any one of the four subintervals, which means that the digital blanking signal can have either phase 0, phase 1, phase 2 or phase 3.

For the preferred embodiment it will be described how the phase of the digitized blanking signal is derived from the low pass filtered analog blanking signal.

The range of values of the blanking signal is divided into 16 steps. When digitizing the analog blanking signal each sample can be assigned one of the 16 values. By comparing the discrete values of consecutive samples of the blanking signal, the exact transition moment can be detected, in other words the phase of the blanking signal can be determined.

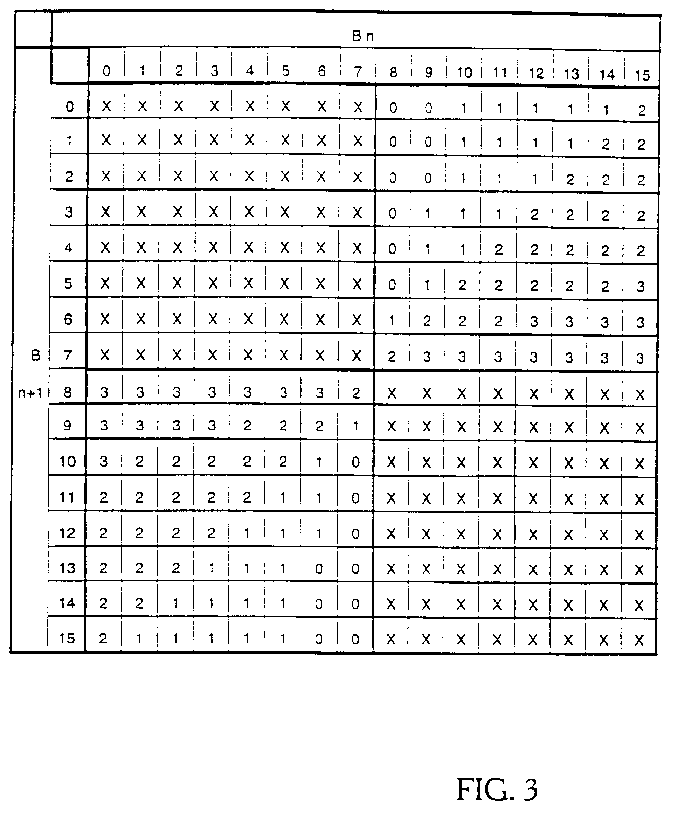

Fig. 3 illustrates how the phase of the blanking signal is determined with the help of a table. Bₙ on the top of the table indicates the n-th sample of the blanking signal. B ₙ₊₁ on the left side of the table indicates the n+1-st sample of the blanking signal. Each of the two consecutive samples can have one of the 16 possible values.

Suppose Bₙ has a value of 14, Bₙ₊₁ has a value of 5. From the table can be seen that the corresponding phase is 2.

In case the n-th sample has a value of 14 and the n+1-st sample has a value of 10 it is assumed that the blanking signal is in a static condition.

In addition to a phase, the digital blanking signal is assigned a state. The state of the digital blanking signal is static low when the digital blanking signal is low in all the subintervals between two adjacent pixels. The state of the digital blanking signal is static high when the digital blanking signal is high in all the subintervals between two adjacent pixels. The state of the digital blanking signal is rising transient when the digital blanking signal has a transition from low to high in one of the subintervals between two adjacent pixels. The state of the digital blanking signal is falling transient when the digital blanking signal has a transition from high to low in one of the subintervals between two adjacent pixels. The state and the phase of the digital blanking signal between two pixels is stored in a four-bit word.

In the next step, the information about the state and the phase of the digital blanking signal is used for inserting parts of a subpicture into the main picture such that irregularities in the brightness along the borderline between the main picture and the subpicture are eliminated and faintness of the border area is avoided.

At the border between the main picture and the subpicture, the main picture is gradually switched off or on and the subpicture is gradually switched on or off. This is done by multiplying the main signals and the subsignals of pixels before and after the switching instant with weighting factors. Using weighting factors avoids irregularities in the brightness along the border line between the main picture and the subpicture.

The faintness of the border area between the main picture and the subpicture is caused by the transient behavior of the subsignals. In most cases, the transients of the subsignals come instantaneously with the transients of the accompanying blanking signal.

Due to the finite slope of the subsignal, the subsignal may not have reached its full intensity at the switching moment of the blanking signal. Therefore, the subsignals of the pixels at the border are replaced by subsignals of pixels from inside the subpicture. The subsignals of pixels from inside the subpicture have their full intensity and do not result in a faint border area when being blended with main signals.

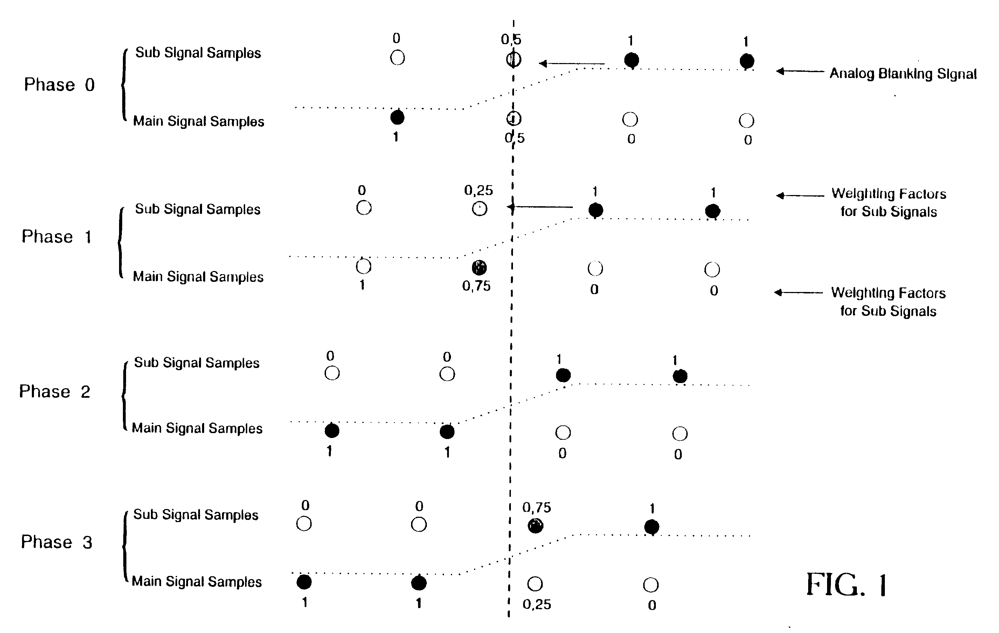

How weighting factors for the main signals and subsignals of pixels near the switching instant are derived for rising transition of the blanking signal and also how subsignals of pixels near the border are replaced by subsignals of pixels from inside the subpicture is illustrated in Figure 1. The main signals and subsignals of the pixels are indicated by circles, with the respective weighting factors listed above or below the circles. Weighting factors and replacement of subsignals are shown for all four possible phase situations of this particular embodiment, namely, phase 0, phase 1, phase 2 and phase 3.

For each phase situation, subsignals and main signals including their respective weighting factors, are listed. The dotted line running in a horizontal direction in each phase situation indicates the analog blanking signal. The dotted line running vertically indicates the switching instant of the blanking signal.

For a blanking signal with phase 0, the pixel on the leftmost side, having weighting factors of 0 for the subsignal and a weighting factor of 1 for the main signal, indicates that the main signal is switched on, the subsignal is switched off. Next, is a pixel situated exactly on the dotted line, indicating the switching instant. Both the subsignal and the main signal have a weighting factor of 0.5. In this situation, the main signal and the subsignal are blended with equal weighting factors. To the right of the switching instant, the main signals are switched off, having a weighting factor of 0, the subsignals are switched on, having a weighting factor of 1.

Since the subsignal at the switching instant may have not yet reached its full intensity, due to its transient behavior, a fully swung-in subsignal of a pixel from inside the subpicture is used for the pixel at the switching instant.

In other words, the subsignal of the pixel to the right of the switching instant is used twice; once for the pixel to the right of the switching instant and once for the pixel exactly at the switching instant. This procedure is indicated by an arrow in the diagram.

Next, is a blanking signal with phase 1. The weighting factors of the main signal and subsignal for the leftmost pixel are 1 and 0, respectively. The weighting factors for the pixel to the left of the switching instant are 0.25 for the subsignal and 0.75 for the main signal, since the distance between this pixel and the switching instant is one subinterval. All the other pixels are more than one subinterval away from the switching instant and, therefore, are either fully switched off or on with weighting factors of 0 or 1. For phase 1, the subsignal of the pixel to the left of the switching instant is replaced by the subsignal of the pixel to the right of the switching instant. The subsignal of the pixel to the right of the switching instant is used for two pixels. In the diagram, this is indicated by an arrow.

For a blanking signal with phase 2 all pixels are farther away from the switching instant than one subinterval. Therefore, the weighting factors are either 1 for the signals that are switched on, or else the weighting factors are 0 for the signals that are switched off. For phase 2, no subsignals are replaced by subsignals of adjacent pixels.

For a blanking signal with phase 3, weighting factors are used in dependence on the distance between the pixels and the switching instant indicated by the vertical dotted line. No replacement of subsignals by subsignals of adjacent pixels takes place for phase 3.

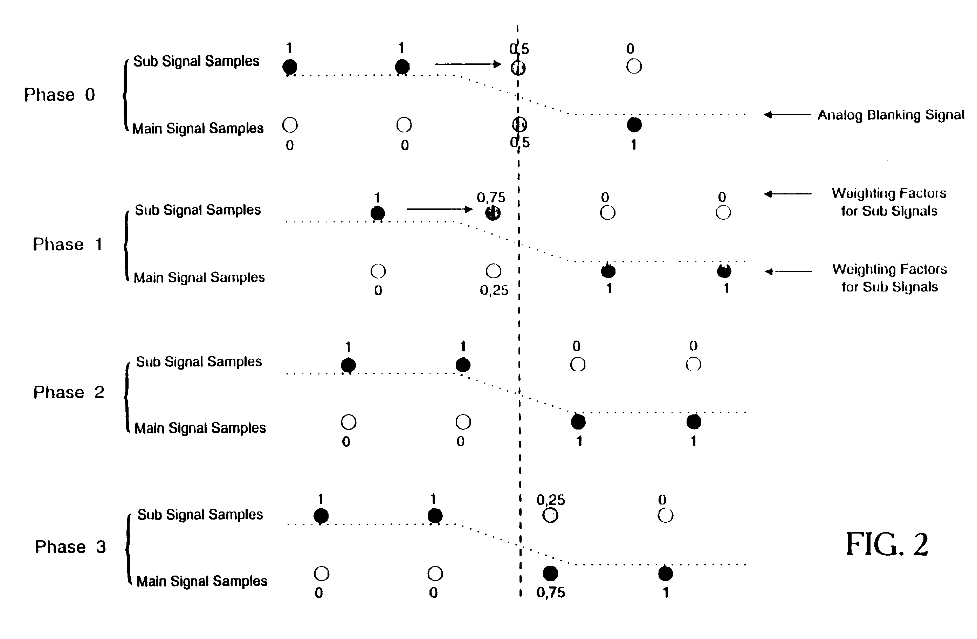

Fig.2 illustrates how weighting factors of the main signals and subsignals of pixels near the switching instant are derived for a falling transition of the blanking signal. Also, it is illustrated how subsignals are replaced by subsignals of adjacent pixels.

Weighting factors at the falling transition of the blanking signal are chosen just like the weighting factors at the rising transition. That is, main signals and subsignals for pixels which are at the switching instant, indicated by the vertical dotted line, have a weighting factor of 0.5. Picture signals of pixels which are at a distance of one subinterval away from the switching instant are assigned a weighting factor of 0.25 or 0.75, depending on whether they are being switched off or on. All main and subsignals for pixels which are more than one subinterval away from the switching instant are assigned weighting factors of 0 or 1, depending on whether they are switched off or on.

For phase 0 or 1, subsignals of pixels from within a subpicture are used to replace the subsignals of pixels at the border. In other words, subsignals of pixels from inside the subpicture are used for two pixels, namely, for the pixel inside the subpicture and for the pixel at or near the switching instant. This is indicated by the arrow in the diagram. For phase 2 and phase 3, no subsignals of the pixels at or near the border between the main picture and subpicture are replaced.

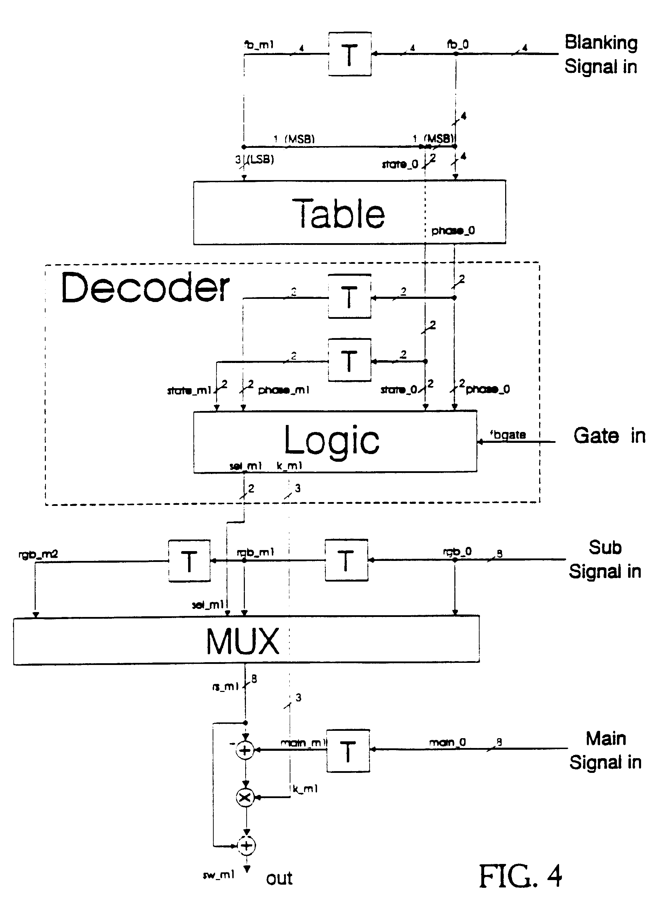

Fig.4 illustrates how, in a preferred embodiment, the signal processing is performed. The signal flow in the block diagram of Fig.4 is from right to left. By this, the pixel data left and right to the pixel delay modules T are related to the position of the pixels on the TV screen. The delay lines in the diagram are adjusted, so that delay modules under each other correspond to the same time stamp.

The incoming blanking signal fb_0, which is sampled to a four-bit data stream is first fed to a pixel delay module T, its output being fb_m1. The most significant bits (MSBs) of fb_0 and fb_m1 are fed directly to the logic module. They give information about the state of the digital blanking signal. The four possible states are static low, static high, rising transient and falling transient. The least significant bits (LLBs) of fb_0 and fb_m1 are addresses of a look-up table, which hold the phase information for the transients of the digital blanking signal. Since rising and falling transients are stored in the same table, one more bit is needed for rising/falling addressing. For this purpose, also the MSB of fb_0 goes to the table.

The table gives a two-bit phase information corresponding to one of the four possible subintervals of the pixel period, where the transition of the blanking signal occurred. The state and phase outputs state_0 and phase_0 of the table are fed to the decoder module. This module produces weighting factors k_m1 for the main signals and the subsignals and selects the shift value sel_m1 for a possible replacement of the subsignal.

In the decoder module, state and phase data are delayed by one pixel clock. The functionality of the logic block is explained with reference to Fig.1 and Fig.2. The weighting factors are determined such that the subinterval where the transition of the blanking signal takes place is assigned a weighting factor of 0.50 for both the main signal and the subsignal. The subintervals adjacent to the subintervals with the weighting factor 0.50 are assigned the weighting factor 0.25 for the signal that is being switched off and a weighting factor of 0.75 for the signal that is being switched on. The subintervals being next but one to the subinterval where the transition of the blanking signal occurs are assigned the weighting factors 0.00 and 1.00 for the signals that are switched off or on, respectively.

The output sel_1 of the decoder module is addressing a multiplexer for the undelayed subsignal rgb_0 and delayed subsignals rgb_m1 and rgb_m2. From the logic, also comes the three-bit weighting factor k_m1 with one of the five possible values of 0.00, 0.25, 0.50, 0.75, 1.00.

At the final weighting and summing point the main signal main_m1 is multiplied with a factor k_m1, while the subsignal rs_m1 is multiplied by (1-k_m1). The two adders are chosen so that only one multiplier is needed for this blending operation.

The decoder may be disabled with the fbgate signal. When the fbgate signal is in a low state, only the main signals are used for signal processing and no blanking occurs. When in a high state, the fbgate signal enables blanking of the main signals.

One embodiment of the present invention uses only the luminance values of the main signals and the subsignals for signal processing. In a preferred embodiment, both luminance and chrominance values are used for signal processing.

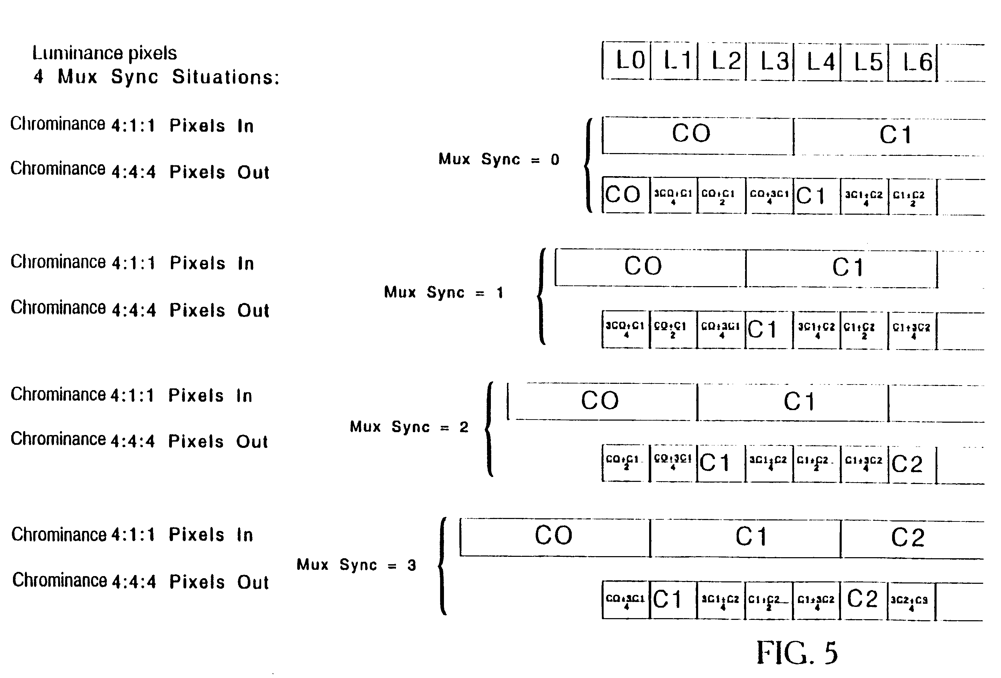

Furthermore, the data rate of the chrominance values is increased by interpolation between two chrominance values prior to processing the main signals and the subsignals in the above described method. Fig.5 illustrates how the chrominance values of the original chrominance pixels that are four times as wide as luminance pixels are interpolated so that, in this example, the resulting chrominance pixels are as wide as the luminance pixels.

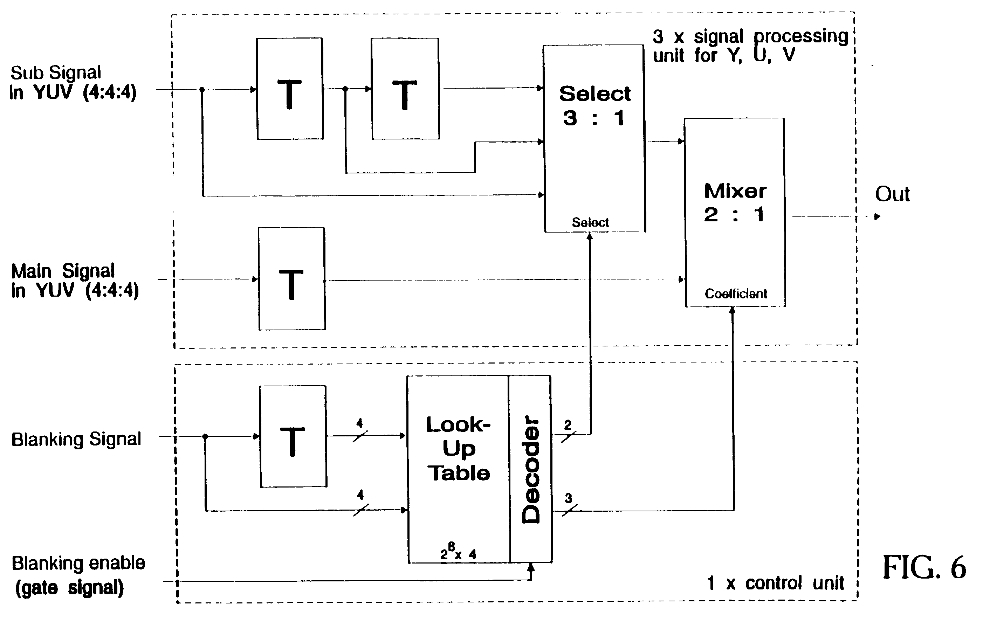

Fig. 6 shows an illustrative example of the hardware structure performing signal mixing according to a preferred embodiment of the present invention.

The signal processing unit, enclosed by a broken line, is provided three times in order to process the luminance signal Y and the chrominance signals U and V simultaneously. Since the data rate of the chrominance signals has been up-sampled to the data rate of the luminance signals the luminance and chrominance processing is identical and be can performed with identical hardware.

The control unit also enclosed by a broken line provides signals to the three signal processing units.

The incoming digitized blanking signal is fed to the delay module T and to the lookup table. Thus the lookup table is provided with the undelayed and once delayed blanking signal. The undelayed and once delayed blanking signal refer to the n+1-st and n-th sample of the blanking signal B ₙ₊₁ and B ₙ of Fig.3 and to the signals fb _ 0 and fb _ m1 of Fig. 4.

The decoder provides a 2 bit output to the select unit, according to which the undelayed, once delayed or twice delayed subsignal is selected for mixing with the main signal. Selecting the undelayed subsignal means that the subsignal of a pixel to the right of a pixel near the border replaces the subsignal of the pixel near the border. This is illustrated for phase 0 and 1 in Fig.1. Selecting the once delayed subsignal means that the subsignal of a pixel is not replaced by the subsignal of an adjacent pixel. Selecting the twice delayed subsignal means that the pixel information is replaced by the pixel information of the pixel adjacent to the left. This is illustrated in Fig. 2.

The subsignal that has been selected is put through to the mixer unit. The mixer unit also receives the once delayed main signal and a coefficient indicating the weighting factor. The selected subsignal and the main signal are weighted according to their respective weighting factor and are added to produce an output signal.

The blanking enable signal may be used to disable the decoder. In that case only the main signals are used for signal processing and no blanking of main signals occurs.

## Claims

1. Method of inserting a sub-picture into a main picture on a TV screen by using a blanking signal for switching between said main signal and said sub-signal, comprising the steps of
digitising said main signal, said sub-signal and said blanking signal,
dividing a distance between two adjacent pixels of the border area of said main picture and said sub-picture into said sub-intervals, wherein one pixel belongs to said main picture and the other pixel to said sub-picture,
assigning the switching moment of said blanking signal to one of said sub-intervals, and
replacing the value of the border pixel in said sub-picture by a value of a neighbouring pixel in said sub-picture when said switching moment of said blanking signal occurs in a selected range of sub-intervals.

2. Method according to claim 1
**characterized by**
increasing the data rate of the chrominance signals of the main signal and the sub-signal up to the data rate of the luminance signal by interpolating between the chrominance signals prior to switching between the main signal and the sub-signal.

3. Method according to claim 1 or 2,
**characterized by**
replacing both the luminance value and the chrominance value of the border pixel of the sub-signal by the value of its neighbouring pixel.

4. Method according to any of claims 1 - 3,
**characterized by**
multiplying the pixel values of the main signal and the sub-signal of a pixel of the border area of said main picture and said sub-picture by weighting factors and
blending the weighted pixel value of the main signal with the weighted pixel value of the sub-signal.

5. Method according to claim 1 - 3,
**characterized by**
multiplying the luminance value and the chrominance value of a pixel of the main signal and the sub-signal in the area of the border by weighting factors and
blending the weighted luminance values and chrominance values of the main signal and the sub-signal.

6. TV system comprising a circuit for inserting a sub-picture into a main picture on a TV screen by using a blanking signal for switching between said main signal and said sub-signal, said circuit comprises:
digitising means for digitising said main signal, said sub-signal and said blanking signal,
look up table means (Table) for assigning a switching moment of said blanking signal to one of said sub-intervals, wherein a transition of said switching signal between a main picture and a sub-picture is divided into a plurality of sub-intervals,
decoder means (Decoder) for providing a first control signal (k_m1) and a second control signal (sel_m1) in response to the blanking signal, the first control signal (k-m1) being representative of the blanking signal, the second control signal (sel_m1) being representative of the selection of a pixel value of the sub-signal, wherein a value of a neighbouring pixel in said sub-picture is selected when said switching moment of said blanking signal occurs in a selected range of sub-intervals,
selecting means (MUX) for selecting a value of a pixel of said sub-picture in response to said second control signal (sel_m1), and
mixing means for mixing the sub-signal as selected by said selection means (MUX) and the main signal in accordance with said first control signal (k_m1).

7. TV system according to claim 6
**characterized in that**
the luminance signals and chrominance signals of the sub-signal and the main signal are processed.

8. TV system according to claim 6 or 7
**characterized by**
interpolating means for increasing the data rate of the chrominance signals of the sub-signal and the main signal up to the data rate of the luminance signals of the sub-signal and the main signal by interpolating between successive chrominance signal values.

9. TV system according to any of claims 6 to 8
**characterized in that**
said decoder means providing said first control signal in response to said assigned sub-interval, wherein said first control signal (k_m1) being representative of a weighting factor by which to mix the sub-signal and the main signal.

10. TV system according to any of claims 6 to 9
**characterized by**
a low pass filter for low pass filtering the analog blanking signal prior to digitizing.

## Patentansprüche

1. Verfahren zum Einfügen eines Teilbildes in ein Hauptbild auf einem TV-Bildschirm unter Verwendung eines Austastsignals zur Umschaltung zwischen dem Hauptsignal und dem Teilsignal mit den Schritten:
Digitalisieren des Hauptsignals, des Teilsignals und des Austastsignals,
Teilen eines Abstandes zwischen zwei benachbarte Pixeln des Grenzbereichs des Hauptbildes und des Teilbildes in die Unterintervalle, wobei ein Pixel zu dem Hauptbild und das andere Pixel zu dem Teilbild gehört,
Zuordnen des Umschaltaugenblicks des Austastsignals zu einem der Unterintervalle und
Ersetzen des Wertes des Randpixels in dem Unterintervall durch einen Wert eines benachbarte Pixels in dem Teilbild, wenn der Umschaltaugenblick des Austastsignals in einem ausgewählten Bereich von Unterintervallen auftritt.

2. Verfahren nach Anspruch 1,
**gekennzeichnet durch**
Erhöhen der Datenrate der Chrominanzsignale des Hauptsignals und des Teilsignals bis zu der Datenrate des Luminanzsignals durch Interpolieren zwischen den Chrominanzsignalen vor der Umschaltung zwischen dem Hauptsignal und dem Teilsignal.

3. Verfahren nach Anspruch 1 oder 2,
**gekennzeichnet durch**
Ersetzen sowohl des Luminanzwertes als auch des Chrominanzwertes des Randpixels des Teilbildes durch den Wert seines benachbarten Pixels.

4. Verfahren nach einem der Ansprüche 1 bis 3,
**gekennzeichnet durch**
Multiplizieren des Pixelwertes des Hauptsignals und des Teilsignals eines Pixels des Grenzbereichs des Hauptbildes und des Teilbildes mit Gewichtungsfaktoren und
Mischen des gewichteten Pixelwertes des Hauptsignals mit dem gewichteten Pixelwert des Teilsignals.

5. Verfahren nach einem der Ansprüche 1 bis 3,
**gekennzeichnet durch**
Multiplizieren des Luminanzwertes und des Chrominanzwertes eines Pixels des Hauptsignals und des Teilsignals im Bereich der Grenze mit Gewichtungsfaktoren, und
Mischen der gewichteten Luminanzwerte und Chrominanzwerte des Hauptsignals und des Teilsignals.

6. TV-System mit einem Schaltkreis zum Einfügen eines Teilbildes in ein Hauptbild auf einem TV-Bildschirm unter Verwendung eines Austastsignals zur Umschaltung zwischen dem Hauptsignal und dem Teilsignal, wobei der Schaltkreis umfaßt:
eine Digitalisierungseinrichtung zur Digitalisierung des Hauptsignals, des Teilsignals und des Austastsignals,
einer Nachschlagetabelleneinrichtung (Tabelle) zur Zuordnung eines Umschaltaugenblickes des Austastsignals zu einem der Unterintervalle, wobei ein Übergang des Umschaltsignals zwischen einem Hauptbild und einem Teilbild in eine Mehrzahl von Unterintervalle unterteilt ist,
eine Dekodereinrichtung (Decoder) zur Bereitstellung eines ersten Steuersignals (k_m1) und eines zweiten Steuersignals (sel_m1) in Abhängigkeit von dem Austastsignal, wobei das erste Steuersignal (k_m1) das Austastsignal darstellt, das zweite Steuersignal (sel_m1) die Auswahl eines Pixelwertes des Teilsignals darstellt, wobei ein Wert eines benachbarten Pixels in dem Teilbild ausgewählt wird, wenn der Umschaltaugenblick des Austastsignals in einem ausgewählten Bereich von Unterintervallen auftritt,
eine Auswahleinrichtung (MUX) zur Auswahl eines Wertes eines Pixel des Teilbildes in Abhängigkeit von dem zweiten Steuersignal (sel_m1), und
eine Mischeinrichtung zum Mischen des von der Auswahleinrichtung (MUX) ausgewählten Teilsignals und des Hauptsignals in Übereinstimmung mit dem ersten Steuersignal (k_m1).

7. TV-System nach Anspruch 6,
**dadurch gekennzeichnet,** daß
die Luminanzsignale und Chrominazsignale des Teilsignals und des Hauptsignals verarbeitet werden.

8. TV-System nach Anspruch 6 oder 7,
**gekennzeichnet durch**
eine Interpolationseinrichtung zur Erhöhung der Datenrate der Chrominanzsignale des Teilsignals des Hauptsignals bis zu der Datenrate der Luminanzsignale des Teilsignals und des Hauptsignals durch Interpolation zwischen aufeinanderfolgenden Chrominanzsignalwerten.

9. TV-System nach einem der Ansprüche 6 bis 8,
**dadurch gekennzeichnet,** daß
die Dekodereinrichtung das erste Steuersignal in Abhängigkeit von dem zugeordneten Unterintervall bereitstellt, wobei das erste Steuersignal (k_m1) einen Gewichtungsfaktor zum Mischen des Teilsignals und des Hauptsignals darstellt.

10. TV-System nach einem der Ansprüche 6 bis 9,
**gekennzeichnet durch**
einen Tiefpaßfilter zur Tiefpaßfilterung des analogen Austastsignals vor der Digitalisierung.

## Revendications

1. Procédé d'insertion d'une sous-image dans une image principale sur un écran de télévision par utilisation d'un signal de suppression destiné à passer dudit signal principal au dit sous-signal et vice versa, comprenant les étapes de :
- numérisation dudit signal principal, dudit sous-signal et dudit signal de suppression,
- division d'une distance entre deux pixels adjacents de la zone de limite de ladite image principale et de ladite sous-image en lesdits sous-intervalles, dans laquelle un pixel fait partie de ladite image principale et l'autre pixel de ladite sous-image,
- assignation du moment de commutation dudit signal de suppression à l'un desdits sous-intervalles, et
- remplacement de la valeur du pixel de limite dans ladite sous-image par une valeur d'un pixel avoisinant dans ladite sous-image lorsque ledit moment de commutation dudit signal de suppression se produit dans une plage sélectionnée de sous-intervalles.

2. Procédé selon la revendication 1, caractérisé par l'accroissement de la vitesse de transmission de données des signaux de chrominance du signal principal et du sous-signal jusqu'à la vitesse de transmission de données du signal de luminance par interpolation entre les signaux de chrominance avant commutation du signal principal et du sous-signal.

3. Procédé selon les revendications 1 ou 2, caractérisé par le remplacement à la fois de la valeur de luminance et de la valeur de chrominance du pixel de limite du sous-signal par la valeur du pixel avoisinant.

4. Procédé selon l'une quelconque des revendications 1 à 3, caractérisé par :
- la multiplication des valeurs de pixel du signal principal et du sous-signal d'un pixel de la zone de limite de ladite image principale et de ladite sous-image par des facteurs de pondération, et
- le mélange de la valeur pondérée de pixel du signal principal avec la valeur pondérée de pixel du sous-signal.

5. Procédé selon les revendications 1 à 3, caractérisé par :
- la multiplication de la valeur de luminance et de la valeur de chrominance d'un pixel du signal principal et du sous-signal dans la zone de limite par des facteurs de pondération, et
- le mélange des valeurs pondérées de luminance et des valeurs pondérées de chrominance du signal principal et du sous-signal.

6. Système de télévision comprenant un circuit destiné à insérer une sous-image dans une image principale sur un écran de télévision par utilisation d'un signal de suppression pour la commutation entre ledit signal principal et ledit sous-signal, ledit circuit comprenant :
- des moyens de numérisation dudit signal principal, dudit sous-signal et dudit signal de suppression,
- des moyens de table à consulter (table) destinés à assigner un moment de commutation dudit signal de suppression à l'un desdits sous-intervalles, dans lesquels une transition dudit signal de commutation entre une image principale et une sous-image est divisée en une pluralité de sous-intervalles,
- des moyens de décodage (décodeur) destinés à fournir un premier signal de commande (k_m1) et un second signal de commande (sel_m1) en réponse au signal de suppression, le premier signal de commande (k_m1) étant représentatif du signal de suppression, le second signal de commande (sel_m1) étant représentatif de la sélection d'une valeur de pixel du sous-signal, dans lesquels une valeur d'un pixel avoisinant dans ladite sous-image est sélectionnée lorsque ledit moment de commutation dudit signal de suppression se produit dans une plage sélectionnée de sous-intervalles,
- des moyens de sélection (MUX) destinés à sélectionner une valeur de pixel de ladite sous-image en réponse au dit second signal de commande (sel_m1), et
- des moyens de mixage destinés à mixer le sous-signal sélectionné par lesdits moyens de sélection (MUX) et le signal principal en fonction dudit premier signal de commande (k_m1).

7. Système de télévision selon la revendication 6, caractérisé en ce que les signaux de luminance et les signaux de chrominance du sous-signal et du signal principal sont traités.

8. Système de télévision selon les revendications 6 ou 7, caractérisé par des moyens d'interpolation destiné à augmenter la vitesse de transmission de données des signaux de chrominance du sous-signal et du signal principal jusqu'à la vitesse de transmission de données des signaux de luminance du sous-signal et du signal principal par interpolation entre des valeurs successives de signal de chrominance.

9. Système de télévision selon l'une quelconque des revendications 6 à 8, caractérisé en ce que lesdits moyens de décodage fournissent ledit premier signal de commande en réponse au dit sous-intervalle assigné, dans lesquels ledit premier signal de commande (k_m1) est représentatif d'un facteur de pondération par lequel sont mixés le sous-signal et le signal principal.

10. Système de télévision selon l'une quelconque des revendications 6 à 9, caractérisé par un filtre passe-bas destiné à un filtrage passe-bas du signal analogique de suppression avant sa numérisation.
